# EUROPEAN PATENT APPLICATION

(11) **EP 4 588 843 A1**
(43) Date of publication of application: **23.07.2025**
(21) Application number: 24153051.8
(22) Date of filing: 22.01.2024
(51) Int. Cl.: B65G 1/04

(54) **AN ENVIRONMENTAL DETECTION SYSTEM**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to an environmental detection system for use in an automated storage and retrieval system. The environmental detection system comprises: at least one elongate frame member for use in a frame of the automated storage and retrieval system, the frame defining a plurality of storage columns for receiving stacks of storage containers; and a detection apparatus for detecting an environmental condition. Each elongate frame member comprises: at least one vent in a longitudinal surface thereof; and an internal channel disposed to provide fluid communication between the vent and the detection apparatus.

## Description

### TECHNICAL FIELD

The disclosure relates to an environmental detection system. More particularly, it relates to an environmental detection system for use in an automated storage and retrieval system and a method of detecting an environmental condition in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As a safety measure, warehouses usually include fire detection and suppression systems. Detection systems detect conditions indicative of the presence of fire in the warehouse, such as smoke or heat. Traditional warehouses often employ optical beam smoke detectors as a cost-effective fire detection means. Optical beam smoke detectors detect fire by projecting a beam of light across the large area of the warehouse and detecting the amount of transmitted light obscured or scattered by smoke. In response, the detection systems trigger an alarm and/or a fire suppression system. Traditional warehouse fire suppression systems involve ceiling sprinklers supplying fire suppressant downward into the warehouse. When triggered, the alarm may call fire fighters to the warehouse to supply fire suppressant directly onto the fire from the warehouse aisles using a firehose.

However, existing detection systems may not be susceptible to further improvement for automated storage and retrieval systems comprising a three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of an environmental detection system suitable for use in the system of Fig. 1;
Fig. 5B shows a side view of a frame member of the environmental detection system of Fig. 5A;
Fig. 5C shows an enlarged portion of the frame member of Fig. 5A;
Fig. 5D shows a vent in the frame member of Fig. 5A;
Fig. 6 shows a storage column and an environmental detection system;
Fig. 7A shows a section of a storage system, such as the system of Fig. 1, incorporating an environmental detection system;
Fig. 7B shows a section of a storage system, such as the system of Fig. 1, incorporating an alternative environmental detection system; and
Fig. 8 shows a flowchart of a method suitable for detecting an environmental condition in the system of Fig. 1.

### DETAILED DESCRIPTION

In overview, the disclosure relates to an environmental detection system that is suitable for use in an automated storage and retrieval system (also referred to as a storage system). For instance, the environmental detection system may be a fire detection system. The environmental detection system comprises at least one elongate frame member suitable for use in a frame of the automated storage and retrieval system. The frame defines a plurality of storage columns for receiving stacks of storage containers. As used herein, the frame member(s) of the environmental detection system maybe referred to as aspirating frame members to distinguish the frame member(s) of the environmental detection system from the other frame members of the automated storage and retrieval system. The environmental detection system also comprises a detection apparatus suitable for detecting an environmental condition. For instance, when the environmental detection system is a fire detection system, the environmental condition may be a condition indicative of fire such as the presence of smoke and the detection apparatus may include a smoke detector. Each elongate frame member comprises at least one vent in a longitudinal surface thereof (i.e., of the respective elongate frame member); and an internal channel disposed to provide fluid communication between the vent and the detection apparatus. This provides an improvement over, for example, external optical beam smoke detectors which cannot detect smoke within bins densely stored in three-dimensional grid.

The detection apparatus of the environmental detection system is in fluid communication with at least one vent in elongate frame members of a frame defining storage columns. The environmental detection system therefore provides environmental detection from within the storage columns. That is, the environmental detection system provides environmental detection in the densely packed bins within the storage columns. The environmental detection system provides environmental detection in the densely packed bins because the environmental detection system includes elongate frame members of the frame. In particular, the environmental detection system provides environmental detection in storage columns and bins located towards the center of the storage system, from which ventilation outside the grid can be poor. Thus, the environmental detection system allows for effective environmental detection (e.g., fire detection or smoke detection) within the center of the automated storage and retrieval system itself.

Further, since the frame of the automated storage and retrieval system spans the entire storage area thereof, and the frame comprises frame members, the environmental detection system described herein has a wide footprint across the entire storage and retrieval system. In other words, the environmental detection system achieves scalable environmental detection across a large area of storage columns. As a consequence, when the detection apparatus includes a fire or smoke detector, the environmental detection system (a fire or smoke detection system), can detect fire or smoke in bins in a large number of storage columns across the entire storage system, thereby addressing the need for alternative fire detection solutions for automated storage and retrieval systems.

The environmental detection system includes elongate frame members that can be provided as frame members of an automated storage and retrieval system. As such, the environmental detection system described herein can be easily, efficiently and cheaply installed into a frame of the storage system by replacing the usual frame members with the (aspirating) frame members of the environmental detection system.

The frame members of the detection system include an internal channel, housed within the frame members. Housing the channel within the frame members allows the frame members to act as a central hub for environmental detection in the columns around the frame members. The environmental detection system can therefore be easily integrated into a frame because no pipes need be routed around the frame member to achieve environmental detection in every column around the frame member. For example, the at least one vent can be positioned in any direction about the frame member, towards any storage column, without further piping. That is, the vents can equally draw air into the channel and to the detection apparatus from all directions around the frame member. As pipes need not be routed around the frame member, the frame member of the environmental detection system can be more simply, easily and cheaply integrated within the grid or frame of an automated storage and retrieval system.

### Automated storage and retrieval system overview

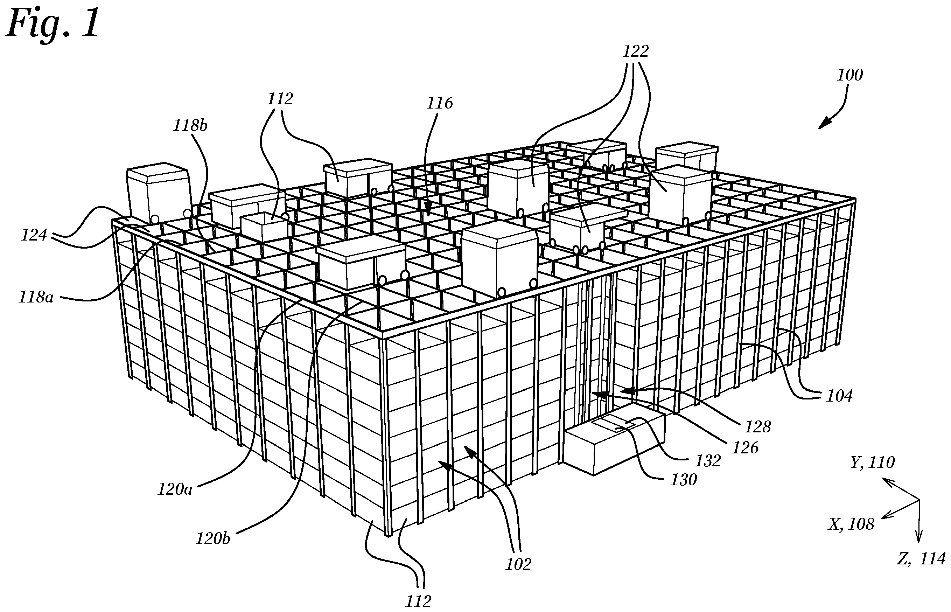

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

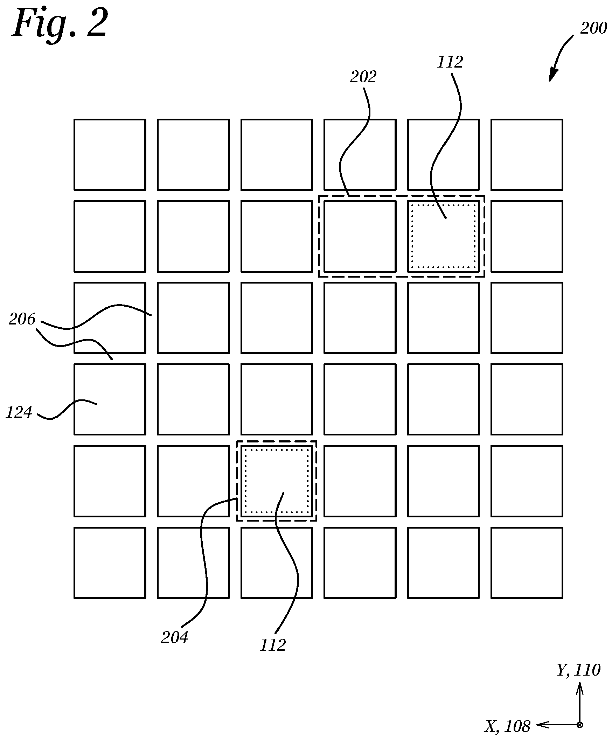

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

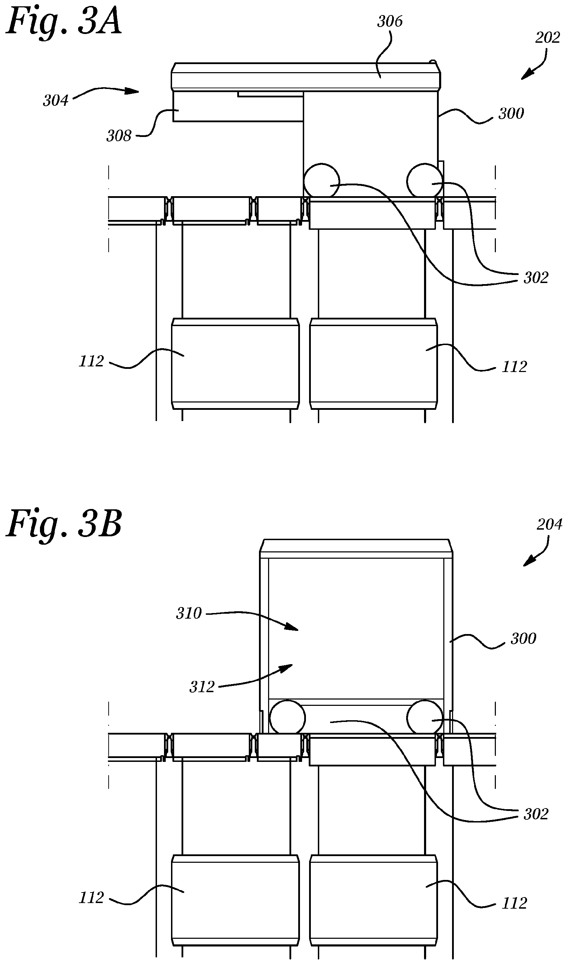

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

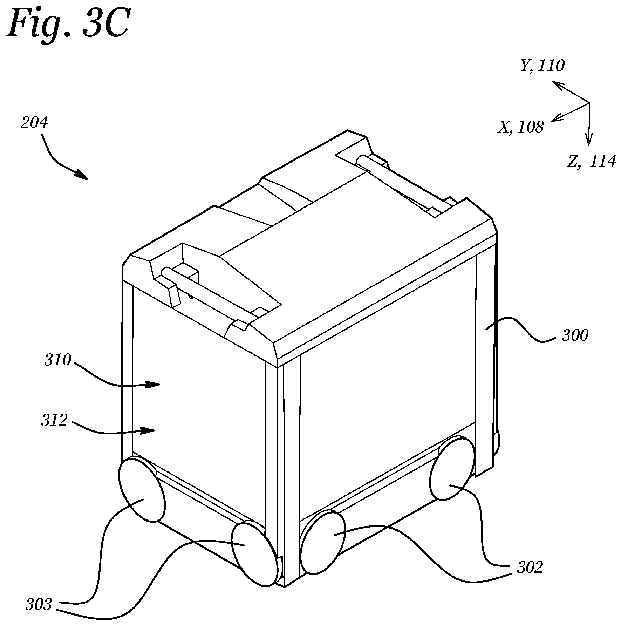

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

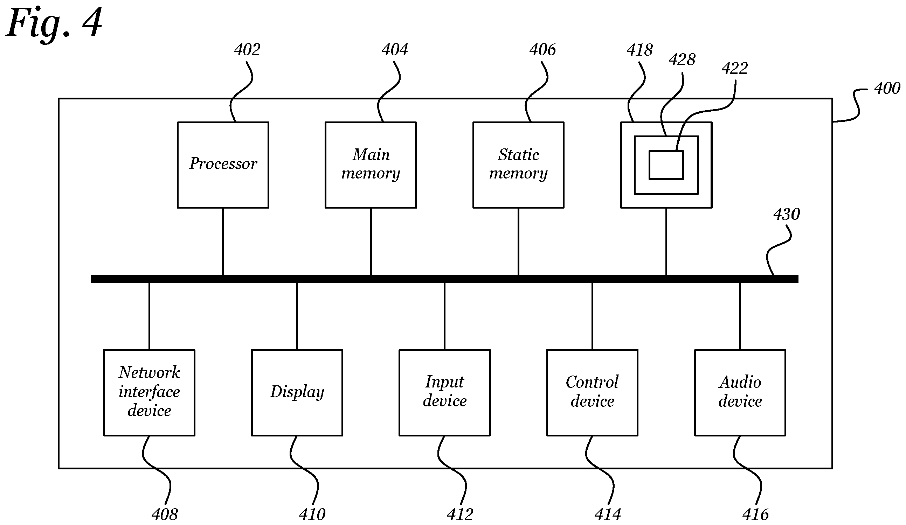

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Specific improved system for environmental detection

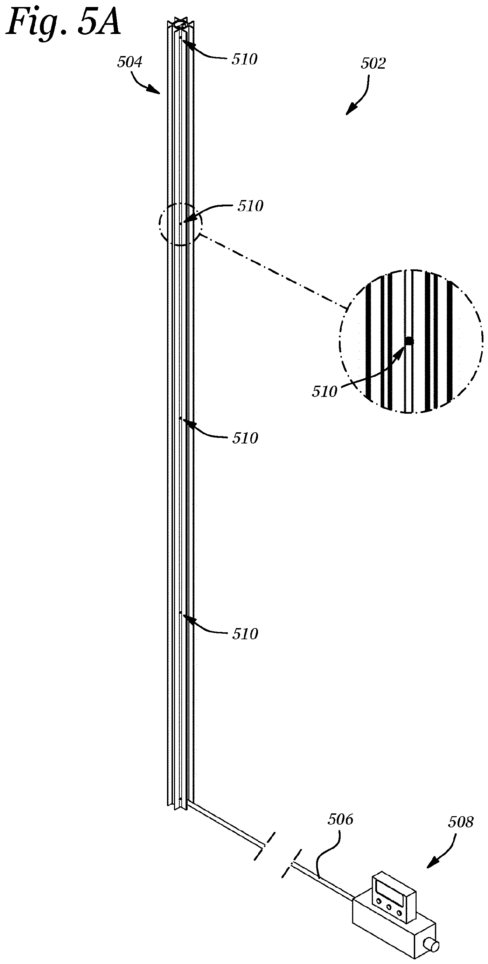

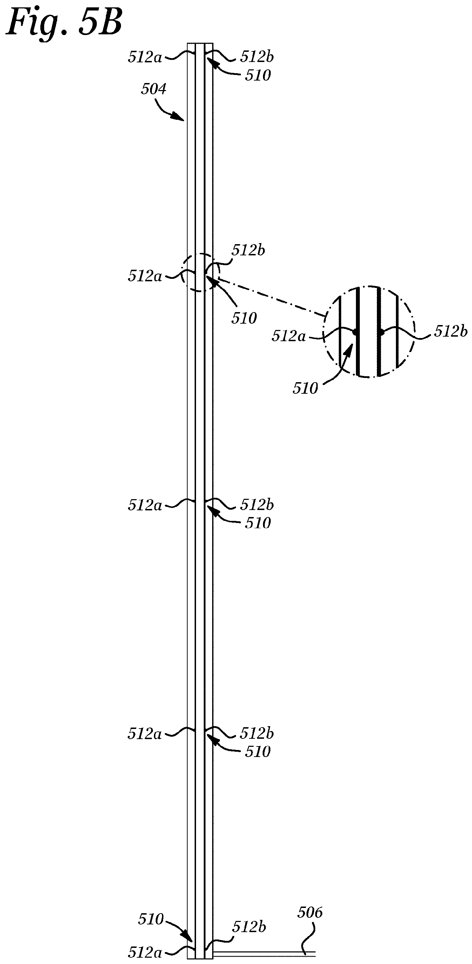

Referring to Fig. 5A, an environmental detection system 502 (which may be a fire detection system) is depicted in perspective view. Portions of the environmental detection system 502 of Fig. 5A are depicted in more detail in Figs. 5B-5D. The environmental detection system 502 includes a frame member 504 (which may also be referred to as a support element or an aspirating frame member), a transfer pipe 506, and a detection apparatus 508. Frame member 504 is suitable for use in a frame of the automated storage and retrieval system of Fig. 1. For instance, frame member 504 may be provided as one of vertical frame members 104. Frame member 504 may alternatively be provided as a horizontal frame member. In some examples, the environmental system may also include additional frame members, each of which is suitable for use in the frame and may be provided as others of frame members 104. In these examples, multiple transfer pipes may be provided as a network to allow communication between each frame member and the detection apparatus 508.

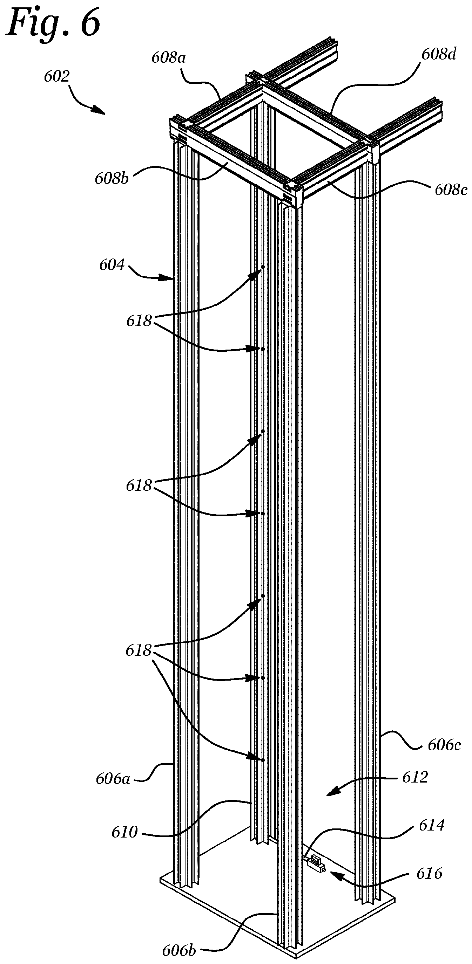

As show, the frame member 504 is elongate. That is, the frame member is longer in a longitudinal direction than it is wide in a transverse direction perpendicular to the longitudinal direction. The longitudinal direction may be considered an elongate or long direction and may extend parallel to the longitudinal or elongate axis. Similarly, the transverse direction may be any dimension extending radially from the longitudinal or elongate axis, for instance in a plane transverse to the longitudinal or elongate axis. When provided in an automated storage and retrieval system, the frame member 504's elongate direction maybe the vertical direction (e.g., the Z direction 114 shown in Fig. 1). Alternatively, the elongate direction may be the horizontal direction (e.g., any direction in the plane defined by the X and Y directions 108, 110 shown in Fig. 1). The provision of frame member 504 in a frame of an automated storage and retrieval system is described in more detail herein with respect to Figs. 6-8.

Frame member 504 includes at least one vent 510 in its longitudinal surface (i.e., the longitudinal surface of frame member 504). The vents may be provided as openings (e.g., holes, apertures, slits or cracks). Here, the longitudinal surface is the surface of the frame member 502 extending in the elongate direction, parallel to the longitudinal axis of the elongate frame member 502.

An internal channel 514 may be provided within the frame member 504. For instance, the internal channel 514 may be integrated or housed within the frame member 504, or the assembly thereof. The channel 514 is suitable for carrying fluid, especially gas (e.g., air). Accordingly, the channel 514 may be considered a conduit for gas or air. The channel 514 is disposed within the frame member 504 to provide fluid communication between the vents 510 and the detection apparatus 508. As such, the vents 510 are provided as inlets to the channel 514 to allow the passage of air from the environment surrounding the frame member 504 into the internal channel 514 of the frame member 504. Similarly, the channel 514 allows the passage of air from the vents to the detection apparatus 508. Accordingly, the detection system 502 as a whole allows the passage of air from the environment surrounding the frame member 504, into the internal channel 514 of the frame member 504, and to the detection apparatus 508. As such, detection system 502 may be referred to as an aspirating detection system, and the frame member 504 may be referred to as aspirating frame members 504 because the frame members 504 aspirate or draw air from the surrounding environment into the detection apparatus 508.

Except at the inlets (e.g., the vents) and the outlet (towards the detection apparatus, e.g., to the transfer pipe 506) thereof, the channel 514 is fluid-tight, e.g., airtight or watertight. Providing the channel 514 within the frame member 504 allows the frame member to act as a central hub for the vents because the vent can be positioned in any direction about the frame member, towards any column in the storage and retrieval system, without the need for routing additional pipes.

Air may pass from within the vents, to the detection apparatus 508 via the transfer pipe 506. Accordingly, the transfer pipe 506 provides fluid communication (e.g., air or liquid communication) between the outlet of the channel 514 and the detection apparatus. The transfer pipe may therefore be sized, lengthwise, to distance the detection apparatus 508 from frame member 504. As such, the detection apparatus 508 may be outside the frame of the storage system. When a plurality of frame members is provided, the transfer pipe may comprise a network of transfer pipes to communicate fluid from the respective frame members to the detection apparatus. In the depiction of Fig. 5A, transfer pipe 506 is shown level with the bottom of the frame member 504. However, the transfer pipe 506 may be positioned otherwise relative to the frame member. For instance, the transfer pipe may be level with the top, or an intermediate level, of the frame member 504.

Detection apparatus 508 is suitable for detecting (and configured to detect) at least one specific environmental condition. For instance, the detection apparatus 508 may be suitable for detecting the presence of at least one particular component of a fluid, especially a gas. Here, the gas is the air passing from the environment surrounding the frame member 504, via the vents 510, to the detection apparatus 508. As such, the environmental detection system described herein can be used to detect various environmental conditions or air components surrounding the frame member, according to the suitability of the detection apparatus 508.

When the detection apparatus 508 detects the environmental condition, the detection apparatus may output a signal indicating the environmental condition. The signal may be output to a user. For example, the detection apparatus 508 may be arranged to output the signal to a user of the automated storage and retrieval system via, for instance, the display 410 of the processing system 400, or to any other suitable display around the automated storage and retrieval system. The signal may additionally or alternatively include sounding an alarm, such as a fire alarm, and/or activating a response system, such as a fire suppression system. The signal may be output by any suitable wired or wireless means.

Hence, the suitability of the detection apparatus dictates the environmental condition(s) detectable by the environmental detection system. In some examples, an environmental condition may be the presence of a constituent of the environment, such as the presence of a constituent in the air drawn or diffused through the vents 510 to the detection apparatus 508. The environmental condition(s) may include one or more of: the presence of smoke; the presence of combustible, flammable or toxic gases, such as natural gas or propane; the presence of spoiling biproducts; and/or air composition.

When the environmental condition(s) include the presence of smoke, the detection apparatus 508 is configured to detect the presence of smoke. As an example, detection apparatus 508 may include a smoke detector, i.e., a detector suitable for detecting and configured to detect the presence of smoke in air. Here, smoke comprises any airborne particulates and gases emitted as a product of combustion, ignition or pyrolysis. As such, the composition of the smoke depends on the nature of the burning goods and the conditions of combustion. In some examples, smoke may include any of soot, ash, carbon, nitrogen oxides, sulphur dioxide, carbon dioxide, carbon monoxide, and/or hydrocarbons.

When configured to detect the presence of smoke, the detection apparatus 508 may include one or more of: a photoelectric or optical smoke detector; an ionisation smoke detector; and/or any other suitable type of smoke detector. Photoelectric or optical smoke detectors identify smoke in a sample by illuminating the sample with light and measuring, directly or indirectly, the amount by which the light is scattered or obscured from the sample. A high amount of scattering or obscuration indicates the presence of smoke. Ionisation smoke detectors use a radioisotope to ionise air and detect a change in voltage across ionised air due to smoke.

When the detection apparatus 508 is configured to detect the presence of smoke, the environmental detection system 504 is a fire detection system. Accordingly, when frame member 504 is provided in a storage system, the fire detection system can detect a fire in any storage columns proximal to frame member 504 (e.g., by detecting smoke therefrom). The proximal storage columns include the storage columns immediately neighbouring the frame member 504, but also any surrounding storage columns from which smoke can diffuse or be drawn into frame member 504.

On ignition or combustion, goods in bins 112 emit smoke into the internal environment of the storage and retrieval system. When the bins 112 are stored within a storage column proximal to frame member 504, a sample of air including the smoke can pass through the vents in frame member 504, through the internal channel 514 thereof, and to the detection apparatus 508. The detection apparatus 508 then tests the sample for the presence of smoke. Responsive to the detection apparatus 508 determining that smoke is present in the sample, the detection apparatus 508 outputs a signal indicating the presence of smoke in the environment surrounding the frame member 504. As described herein, the signal may comprise a signal output to a user, sounding a fire alarm, and/or activating a fire suppression system. Accordingly, the detection system 502 provides a solution for fire detection in automated storage and retrieval systems capable of detecting smoke within a grid of the storage system, before smoke is otherwise detectable outside the grid.

When the environmental condition(s) include the presence of combustible, flammable or toxic gases the detection system 502 is configured to detect a gas leak. Here, detection apparatus 508 may be configured as a gas detector, such as a combustible gas sensor, a photoionization detector, an infrared point sensor, an ultrasonic sensor, an electrochemical gas sensor, and metal-oxide-semiconductor (MOS) sensor, and/or any other suitable gas sensor. The gas sensor may be arranged to detect gases contained within the bins 112 of the storage column. Thus, if the bins 112 of the storage column comprise a combustible or flammable gas (such as natural gas, for example propane), the gas detector may be suitable for detecting the stored combustible or flammable gas. The gas sensor may be arranged to detect gases contained near or distributed around (e.g., carried within or about the frame of) the automated storage and retrieval system, thereby enabling early gas leak detection in the storage system. In these examples, responsive to the detection apparatus 508 determining that combustible, flammable or toxic gases are present in the storage system, the detection apparatus may output a signal indicating a gas leak. The signal may sound an alarm. The signal may be output to a user to prompt the user to take appropriate measures for preventing combustion or inhalation of leaked gas. For example, the user may shut down the power to the storage system or evacuate the warehouse within which the storage system is located.

When the environmental condition(s) include the biproducts of spoiling, the detection system 502 may be configured to detect spoiling of perishable goods stored within the bins 112. Here, the automated storage and retrieval system may be used to store produce and other foodstuffs within the bins 112. With time, produce and foodstuffs begin to spoil by mould growth, decomposition or rotting. Such spoiling releases biproducts into the surrounding environment. Example biproducts include propionic acid, lactic acid, methane, hydrogen sulphide and ammonia. Accordingly, the detection system 502 described herein can be used to detect whether produce and other foodstuffs within the bins 112 have spoiled by providing a detection apparatus 508 suitable for detecting whether the sample of air passed thereto from the vents in frame member 504 comprises at least a threshold amount of a spoiling biproduct. The detection apparatus 508 may be arranged to detect specific biproducts that correspond to the biproducts of the perishable goods stored in the storage columns proximal to frame member 504.

When the environmental condition(s) include air composition, the detection system 502 may be configured to monitor the air composition within the automated storage and retrieval system. The automated storage and retrieval system may be used for vertical farming. Vertical farming is the practice of growing crops in vertically stacked layers. Vertical farming is carried out in high carbon dioxide atmospheres and possibly in high nutrient rich atmospheres to allow for fertilisation and efficient crop growth. In the storage system described herein, vertical farming may be carried out by growing crops in the stack of storage containers or bins 112. However, on account of the high bin density in such systems, a problem exists in providing ventilation to bins 112 located in the core of the grid 100. To solve this problem, the environmental condition about the bins 112 located in the core of the grid must be monitored to ensure appropriate amounts of carbon dioxide and nutrients in the atmospheres. Accordingly, when detection system 502 is configured to monitor the air composition, the detection apparatus 508 may include carbon dioxide sensors, humidity or moisture sensors, or any other suitable means of monitoring air composition.

In some examples, detection apparatus 508 maybe configured to detect more than one environmental condition. For instance, the detection apparatus 508 may be arranged to monitor any permutation of more than one of: smoke; combustible, flammable or toxic gases, such as natural gas or propane; biproducts of spoiling; and/or air composition. Accordingly, the detection system 502 can efficiently save space in the storage system by detecting more than one environmental condition. For instance, if one of the functions of the detection system 502 is as a fire detection system, the detection system 502 may also act to monitor the air composition. As such, detection system 502 can be used to space-efficiently monitor more than one environment condition in an automated storage and retrieval system, without sacrificing additional space within the grid 100 of the automated storage and retrieval system to additional sensing means.

As the detection apparatus 508 is provided away from the vents 510, the detection system 502 can be efficiently adapted or reconfigured to monitor different environmental conditions by adapting, replacing or reconfiguring the detection apparatus 508 to detect the desired one or more environmental conditions. That is, no changes need be made to the frame member 504, which sits within the frame. The detection apparatus 508 may be outside the grid and so the detection apparatus 508 can be adapted, replaced or reconfigured noninvasively - i.e., without entering or adapting the grid 100 itself, which would otherwise add cost, complexity, and require a pause in operation of the storage system.

Importantly, the detection system described herein can be noninvasively adapted to detect different environmental conditions as the goods within the storage system changes. For instance, if the goods change from a flammable goods to a vertical farm, the detection system can be adapted by adapting or replacing a detection apparatus 508 arranged to detect the presence of smoke with a detection apparatus 508 arranged to detect air composition, without adapting frame member 504 (or transfer pipes 506).

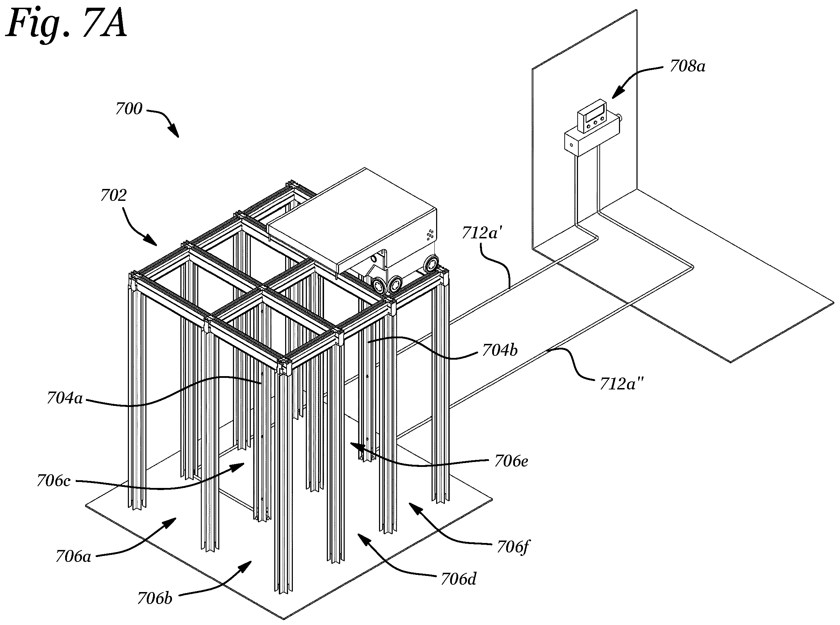

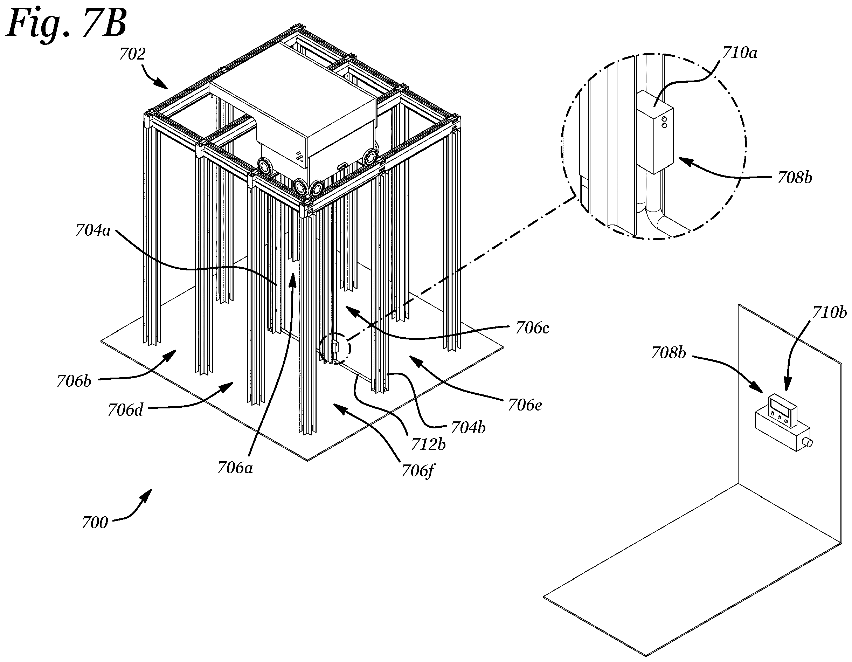

When the environmental detection system includes a plurality of elongate frame members, the detection apparatus 508 may be configured to independently detect the environmental condition from each elongate frame member. For instance, the detection apparatus 508 may be configured to independently detect the environmental condition in the gas (e.g., air) communicated to the detection apparatus 508 from the internal channel of each respective elongate frame member. That is, the detection apparatus may be capable of identifying from which frame member the detected environmental condition originates (i.e., which frame member is surrounded by environment comprising the environmental condition). Accordingly, the internal channel of each elongate frame member may be in fluid communication with the detection apparatus independent of at least one other elongate frame member. The detection apparatus may thus be capable of independently identifying the environmental condition about each elongate frame member. Accordingly, the detection apparatus may include a plurality of detection channels, as described herein with respect to Figs. 7A and 7B.

In some examples, the environmental detection system 502 may include a fan, or any other suitable means to generate a pressure gradient between the detection apparatus 508 and the environment surrounding the frame member 504. For example, the detection apparatus 508 may include a fan disposed and arranged to draw air through the vents 510 and into the detection apparatus 508. Alternatively, the fan may be positioned within the vents 510, the channel 514 in the frame member 504, or the transfer pipe 506. By generating a pressure gradient between the detection apparatus 508 and the environment surrounding the frame member 504, air is drawn from the environment surrounding the frame member 504 into the detection apparatus 508. This allows a greater volume of air to be sampled and analysed at the detection apparatus 508, thereby increasing the accuracy and response time of the detection system 502 compared to detection systems without fans. In systems without fans, the air sample maybe provided at the detection apparatus 508 by diffusion.

Fig. 5B shows a side view of frame member 504. As show, frame member 504 includes a plurality of valves 510 which may be distributed along the longitudinal surface of the frame member 504. This distribution is lengthways along the frame member 504, parallel to the elongate axis. By distributing a plurality of valves 510, a greater total volume of air can be received at the detection apparatus 508, thereby increasing the accuracy and response time of the detection system 502. The distribution of valves 510 need not be uniform. For instance, the plurality of valves 510 may be present at one position along the frame member 504 (such as a lower position or half of the frame member when viewed in relation to the automated storage and retrieval system), but not another position along the frame member (such as an upper position or half of the frame member opposing the lower position). When the plurality of valves 510 are present at a lower position but not the upper portion, an environmental condition in the upper bins 112 are detected due to gravity drawing components of the environment, such as smoke, towards the lower position. Alternatively, the plurality of valves 510 may be evenly distributed along the longitudinal surface to provide an even detection along the length of the frame member 504. An even distribution allows even detection of environmental conditions throughout the neighbouring storage columns.

In some examples, the plurality of vents 510 may be distributed at less than or equal to storage container stacking intervals. Here, a storage container stacking interval corresponds to the height of each storage container (or bin) arranged in a stack. Thus, when the storage containers are stacked, the stacking interval is the periodic distance between each storage container. Accordingly, when the stack of storage containers is received in a storage column, at least one vent 510 may be provided per storage container. The vents 508 can therefore reliably communicate air from every storage container of the stack, via the internal channel 514, to the detection apparatus 508. A result is that the detection system 502 can detect an environmental condition in every storage container or bin.

As shown in Fig. 5B, each vent 510 may include a plurality of vent orifices 512a, 512b, distributed around the transverse perimeter of the frame member 504. The transverse perimeter is the perimeter of the transverse cross section of the frame member 504, where the transverse cross section is the planar cross section taken perpendicular to the frame member's elongate axis. Each vent orifice 512a, 512b may be positioned to face a respective segment around the transverse perimeter of the frame member. Accordingly, each vent orifice 512a, 512b may be positioned to receive, aspirate, or draw air (or a sample thereof) from the respective segment. Here, the respective segments comprise a radially projected area from a portion of the perimeter of the transverse cross section in a direction perpendicular to the elongate axis. In other words, the respective segments comprise portions of the surrounding environment visible to (for instance within a field of view of) the corresponding vent orifice 512a, 512b. The respective segments may not be mutually exclusive. For instance, portions of the surrounding environment may be present in multiple segments. Each of the respective segments may combine to encompass the entire transverse perimeter of the frame member 504. That is, the respective segments may combine to include the radially projected area from the entire perimeter of the transverse cross section. Combining the respective segments to encompass the entire transverse perimeter allows the frame member 504 to receive an air sample from all of its neighbouring storage columns.

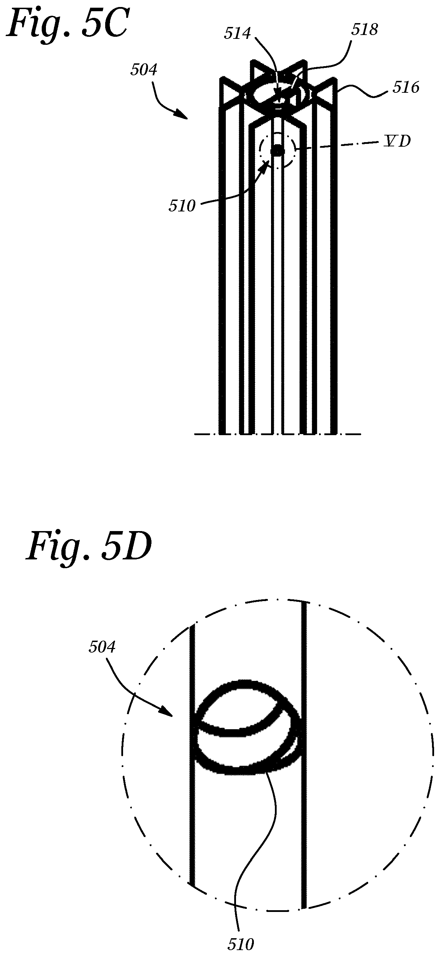

An enlarged portion of the frame member 504 is shown in Fig. 5C. The enlarged portion includes a vent 510. The portion shown in Fig. 5C is the top of the frame member 504 shown in Fig. 5A. As shown, the internal channel 514 is integrated within the frame member 504, and is suitable for carrying fluid, especially a gas (e.g., air). The integration of the internal channel 514 within the frame member 504 may be provided by housing the internal channel 514 within the frame member, as shown. The internal channel 514 is accessible to gas via the vent 510, which is described in more detail with respect to Fig. 5D.

As depicted in Fig. 5C, the frame member 504 may include brackets 516 to hold or guide neighbouring stacks of storage containers. The brackets 516 may act against corresponding brackets on opposing frame members neighbouring the same storage column to retain the stacks of storage containers therebetween. Similarly, the brackets may act to guide the gripping device(s) of the robots, such as robots 202 and 204 shown in Figs. 3A-3C. As depicted, the brackets may include gaps through which air or gas can pass from the surrounding environment to the vent. These gaps may correspond to respective segments around the transverse perimeter of the frame member 504 discussed herein.

Frame member 504 may also include spacers 518 to enable the housing of further utilities within or about the frame member 504. The spacers may also partition the perimeter of the transverse cross section according to the number and position of vents 510 to allow for a directional receipt of gas from the surrounding environment.

An enlarged depiction of a vent 510 is shown in Fig. 5D. As an example, the depiction in Fig. 5D may correspond to the encircled portion of Fig. 5C labelled VD. As shown, the vent comprises an opening in the longitudinal surface of the frame member 504. This opening may take the form of a hole, aperture, slit or crack in the surface of the frame member 504 or the assembly thereof. The opening is shown as a circular opening, but the opening may be shaped in any appropriate way. For instance, the opening may be square, rectangular, ovular, polygonal, regular, and/or irregular. As described with respect to Fig. 5a, a fan may be positioned within the vent 510 to increase the volume of communicated to the detection apparatus 508.

In some examples, the vents 510 may include valves. The valves are arranged to allow air to flow from the surrounding environment, into the channel 514 but prevent air to flow from the channel 514 to the surrounding environment. Accordingly, valves prevent loss of sample air from the channel 514. As such, a greater volume of air can be communicated to the detection apparatus 508 for detection, thereby increasing the accuracy and response time of the detection system 502. Suitable valves for use in the vent include any check, or one-way valve. When the detection system 502 includes means to generate a pressure gradient between the detection apparatus 508 and the environment surrounding the frame member 504, suitable valves include any check, or one-way valve with a cracking pressure lower than the generated pressure gradient generated, particularly the pressure gradient between the channel 514 and the environment surrounding the frame member 504.

Fig. 6 illustrates a storage column 602 of an automated storage and retrieval system. The storage column is defined by frame 604, which may be part of a larger frame, such as the frame of grid 100 described with respect to Fig. 1. Frame includes (vertical) frame members 606a, 606b, 606c and (horizontal) frame members 608a, 608b, 608c. Here, horizontal frame members 608a, 608b, 608c define an access opening for the robots 122. Alternatively, horizontal frame members may be provided at different locations along the length of the storage column, and therefore need not define the access opening.

Frame 604 also includes frame member 610, which is part of environmental detection system 612. In the orientation shown in Fig. 6, frame member 610 defines the far corner of the storage column 602. As frame member is part of environmental detection system 612, frame member 610 is referred to as aspirating frame member 610 and may be any of the frame members of an environmental detection system described herein. For instance, frame member 610 may be as described with respect to frame member 504 of Figs. 5A-D. In the example shown in Fig. 6, aspirating frame member 610 is provided as a vertical frame member or component. However, aspirating frame members may equally be provided as horizontal frame members or components.

The environmental detection system 612 shown in Fig. 6 also includes transfer pipe 614, and a detection apparatus 616. The transfer pipe 614 may be as described with respect to transfer pip 506 of Figs. 5A-D. Similarly, the detection apparatus 616 may be as described with respect to the detection apparatus 508 of Figs. 5A-D.

Aspirating frame member 610 includes a plurality of vents 618, each of which may be as described with respect to vents 510 of Figs. 5A-D. As shown, each vent includes at least one vent orifice positioned to face (into) the storage column. In other words, the vent orifices are positioned to face the respective segment in the direction of the storage column. For instance, the vent orifices are positioned to face a radially projected area, from the frame member 610, towards the area of the storage column 602, as otherwise described herein.

Storage column 602 is arranged to be tessellated with other, cooperating (e.g., matching), storage columns in a quadrilateral fashion. That is, in top view, storage column 602 has a quadrilateral perimeter and can be neighboured by four other columns at each of its four edges. Each column is also neighboured by four frame members at each of its four corners. As such, each frame member may neighbour four storage columns. When provided in a grid 100, such as that of Fig. 1, aspirating frame member 610 may therefore neighbour four storage columns. As such, each vent of aspirating frame member 610 may include a plurality of vent orifices (not shown in Fig. 6), each of which face a respective neighbouring storage column. For instance, the plurality of vent orifices, including the depicted vent orifices positioned to face storage column 602, may also include three additional vent orifices positioned to face three respective segments in the direction of the three other storage columns neighbouring the aspirating frame member 610. In these examples, the vent orifices of aspirating frame member 610 are therefore positioned to draw air (or a sample thereof) from each respective neighbouring storage column.

In other examples, the storage column 602 maybe shaped and tessellated differently. For instance, each column may have a triangular perimeter and be neighboured by three other columns at each of its three edges, in which case the storage columns may be tessellated in a triangular fashion. Alternatively, each column may have a hexagonal perimeter and be neighboured by six other columns at each of its six edges, in which case the storage columns may be tessellated in a hexagonal fashion. In different tessellations, the vent orifices of aspirating frame member 610 may be positioned according to the storage column tessellation such that air can be drawn from each neighbouring storage column thereof. In these examples the vent orifices of aspirating frame member 610 may also be positioned to face respective segments in the respective directions of storage columns neighbouring the aspirating frame member 610 and thereby draw air (or a sample thereof) from each respective neighbouring storage column, according to the tessellation.

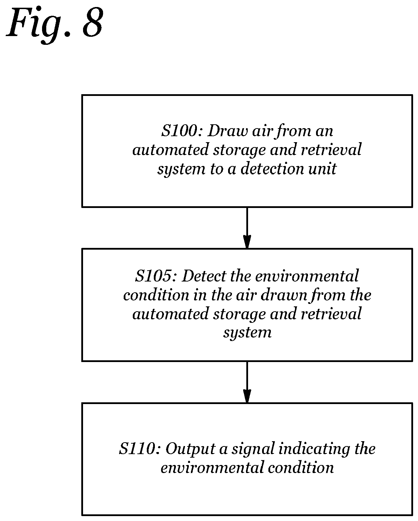

In operation, and as discussed in more detail with reference to Fig. 8, an air sample passes from the area of the storage column 602 for receiving stacks of containers (in which stacks of containers may be received), through the vent orifices and into internal channel of the aspirating frame member 610. Then, the air sample passes through the internal channel and the transfer pipe 614, into the detection apparatus 616. The detection apparatus then may detect an environmental condition, such as any environmental condition described herein, in the air sample. For instance, the detection apparatus may detect the present of smoke in the air sample, indicating a fire in storage column 602.

### Improved system for environmental detection in the grid of an automated storage and retrieval system

Referring to Figs. 7A and 7B, a frame 702 of an automated storage and retrieval system comprises frame members. At least a subset of the frame members may be aspirating frame members of an environmental detection system, as described with respect to Figs. 5A-D. Accordingly, at least a subset of the frame members includes a least one vent in their longitudinal surface, and an internal channel. As such, at least one storage column defined by frame 702 may be as described with respect to Fig. 6.

For example, the section of the grid 700 depicted in Figs. 7A and 7B includes aspirating frame members 704a and 704b as vertical frame members or components. The frame 702 shown defines six storage columns 706a, 706b, 706c, 706d, 706e, 706f. The section of the grid 700 depicted in Figs. 7A and 7B may be a section of grid 100 of the automated storage and retrieval system shown in Fig. 1, which includes many more than the six storage columns.

Aspirating frame members 704a and 704b are positioned in grid 700 such that their respective vents are arranged to draw air (or a sample thereof) from respective columns of the automated storage and retrieval system. Each aspirating frame member neighbours at least one column 706a, 706b, 706c, 706d, 706e, 706f. In the grid 700 of Figs. 7A and 7B, aspirating frame member 704a neighbours storage columns 706a, 706b, 706c, and 706d, and aspirating frame member 704b - positioned at the edge of the section of the grid 700 - neighbours storage columns 706e and 706f. Aspirating frame member 704b may not be at the edge of the grid and may neighbour two further storage columns, not shown. As shown, the other frame members of the frame 702 may not include vents and therefore are not part of the environmental detection system.

The environmental detection system may therefore sample air from each of storage columns 706a, 706b, 706c, 706d via the vent orifices and channel of aspirating frame member 704a. Similarly, the environmental detection system may sample air from each of storage columns 706e, 706f from vent orifices of aspirating frame member 704b. Here, each vent orifice is positioned to draw air from a respective segment around the transverse perimeter of the respective aspirating frame member 704a, 704b. The respective segments may each therefore correspond to a neighbouring storage column. As such, each aspirating frame member 704a, 704b may be arranged to neighbour a number of storage columns and the vent of the respective aspirating frame member 704a, 704b may comprise a corresponding number of vent orifices. Thus, each vent orifice may be positioned to face a respective neighbouring storage column and thereby draw air therefrom. Each storage column 706a, 706b, 706c, 706d, 706e, 706f is arranged to be tessellated with other, cooperating, storage columns in a quadrilateral fashion. However, as described with respect to Fig. 6, the storage columns may be arranged to tesselate differently, in which case each vent orifice may be positioned according to the storage column tessellation such that air can be drawn from each neighbouring storage column.

Accordingly, by providing an environmental detection system in which air is sampled through vents in aspirating frame members 704a, 704b, each aspirating frame member can act as a central hub for sampling air in its neighbouring or proximal storage columns. More specifically, the vents and vent orifices of the aspirating frame members 704a, 704b can be positioned at any angle around the internal channel thereof. Accordingly, the vents and vent orifices may directionally draw air from any neighbouring or proximal column, without routing piping around the frame members. This provides easier, cheaper and simpler environmental detection system manufacture, particularly aspirating frame member manufacture. This also provides easier, cheaper and simpler manufacture of the grid 700 because the aspirating frame members of the environmental detection system can be installed in the same manner as any other frame members, without additional routing. Thus, the systems described herein can be installed to draw air from the grid to a detection apparatus without complex routing around the frame.

The section of the grid 700 depicted in Figs. 7A and 7B includes six storage columns 706a, 706b, 706c, 706d, 706e, 706f, and an environmental detection system including two aspirating frame members 704a, 704b. However, aspirating frame members of the environmental detection system may also be present throughout the whole grid 100 of Fig. 1 or a section thereof. For instance, every frame member, or substantially every frame member, of the grid 100 may be an aspirating frame member. Alternatively, a subset of the grid's 100 frame members may be aspirating.

In some examples, the grid 100 may be organised in recurring unit cells of storage columns. Here, each unit cell comprises an aspirating frame member and at least one column from which the aspirating frame member is arranged to draw air. The arrangement of columns from which the aspirating frame member is arranged to draw air may be determined by the distribution of the vent orifices around the transverse perimeter of the aspirating frame member. For instance, each vent orifice may be positioned to draw air from the segment(s) around the transverse perimeter corresponding to (e.g., facing) the column(s) of the unit cell including the aspirating frame member. Accordingly, the aspirating frame members are distributed to draw air from each (e.g., every) column of the grid. By organising the grid in recurring unit cells, the manufacture of the grid including an environmental detection system can be simplified and air can be reliably drawn to the detection apparatus 708a, 708b throughout the storage volume. In some examples, the unit cells may include multiple aspirating frame members to increase volume of air drawn from the unit cell, and thereby increasing the accuracy and response time of the detection system.

For instance, referring to Figs. 7A and 7B, a unit cell might comprise aspirating frame member 704a and the neighbouring storage columns 706a, 706b, 706c, and 706d, where the aspirating frame member 704a is arranged to draw air from all of its neighbouring storage columns 706a, 706b, 706c, and 706d. This unit cell may be repeated throughout at least a section or zone of the grid 100 shown in Fig. 1. The section of the grid 100 may comprise the internal columns of the grid, excluding one or more (e.g., two, three or four) layers of outer (e.g., outermost) columns. When the detection apparatus 708a, 708b is arranged to detect smoke, the section of the grid may comprise the storage columns within which flammable goods are stored.

As used herein, the goods are considered flammable if they have a flash point less than 50°C above the ambient temperature in the automated storage and retrieval system, or if their flash point is at or below 60°C, at or below 50°C, at or below 40°C, or at or below 30°C. Similarly, when the detection apparatus 708a, 708b is arranged to detect air composition, the section of the grid may comprise the storage columns containing a vertical farm. Similarly, when the detection apparatus 708a, 708b is arranged to detect the biproducts of spoiling, the section of the grid may comprise the storage columns containing perishable goods, such as produce or other foodstuffs.

Put generally, as the frame member is able to detect a fire in any storage columns proximal thereto, each storage column may be proximal to an aspirating frame member. As described, the proximal storage columns include the storage columns immediately neighbouring the frame member (e.g., in the direction the vent orifices face), but also any surrounding storage columns from which smoke can diffuse to frame member. Accordingly, one or fewer aspirating frame member may define each (e.g., every) storage column to provide an environmental detection system capable of detecting an environmental condition in every storage column. For instance, at least every other storage column in at least one direction (such as every other storage column in the X direction 108, or in the Y direction 110) in the grid or a portion thereof may be defined by at least one aspirating frame member. Equally, every storage column in the grid or a portion thereof may be defined by at least one aspirating frame member.

By defining each storage column with one or fewer aspirating frame members, fewer aspirating frame members are required in total to achieve environmental detection within the automated storage and retrieval system. As such, the automated storage and retrieval system can be manufactured with reduced complexity and cost.

The environmental detection system in Figs. 7A and 7B also include detection apparatuses 708a and 708b respectively. Detection apparatus 708a shown in Fig. 7A may be referred to as a detection unit 708a. Detection apparatus 708b shown in Fig. 7B differs from detection apparatus 708a shown in Fig. 7A in that detection apparatus 708b further includes a sensing module 710a and a receiving module 710b. The detection apparatuses 708a, 708b are in fluid communication with the vents of the aspirating frame members 704a and 704b via respective internal channels and transfer pipes 712a', 712a", 712b. The transfer pipes 712a', 712a", 712b may be located beneath the grid 700. For instance, the transfer pipes 712a', 712a", 712b may be located below a floor of the grid 700, which provides a flat base for the grid, increasing the stability of stacks of storage containers in columns 706a, 706b, 706c, 706d, 706e, 706f. Alternatively, the transfer pipes may be integrated within horizontal frame members at the top of the grid. The detection apparatuses 708a, 708b, and transfer pipes 712a', 712a", 712b are as described with respect to Figs. 5A-5D.

Referring to Fig. 7A, detection apparatus 708a or detection unit 708a includes two detection channels. Each detection channel is arranged to independently detect the environmental condition from a respective aspirating frame member. That is, each detection channel is arranged to independently detect the environmental condition in the gas communicated thereto from the internal channel of each respective aspirating frame member 704a, 704b. For instance, the channel of each aspirating frame member maybe in fluid communication with a respective detection channel via a respective transfer pipe.

As shown in Fig. 7A, aspirating frame member 704a is in fluid communication with a first detection channel in detection apparatus 708a via first transfer pipe 712a'. Accordingly, first transfer pipe 712a' provides fluid communication between the outlet of the channel within frame member 704a and the first detection channel of the detection apparatus 708a. Similarly, aspirating frame member 704b is in fluid communication with a second detection channel in detection apparatus 708a via second transfer pipe 712a". Accordingly, second transfer pipe 712a" provides fluid communication between the outlet of the channel within frame member 704b and the second detection channel of the detection apparatus 708a.

Accordingly, detection apparatus 708a including a plurality of detection channels allows the system to identify the frame member from which air comprising the detected environmental condition is drawn. This identification therefore indicates that the environmental condition is present in a storage column proximal to (e.g., neighbouring) the identified frame member. Some storage columns may be proximal to multiple frame members, in which case the identification of multiple frame members can be used to identify the storage column. The detection system may further comprise a controller arranged, responsive to a detection channel detecting the environmental condition in a frame member, to identify the frame member and thereby identify the storage column. The controller may comprise a suitable processor for carrying out this identification and may communicate with or be part of the computing device described with respect to Fig. 4.

In some examples, the controller may be part of the detection apparatus 708a. In these examples, the controller may be further arranged to output a signal identifying the frame member to a user. For example, the controller may be arranged to output the signal to a user of the automated storage and retrieval system via, for instance, the display 410 of the processing system 400, or to any other suitable display around the automated storage and retrieval system. The signal may be output by any suitable wired or wireless means.

In other examples, the controller may be external to the detection apparatus 708a. For instance, the controller may be part of the processing system 400. In these examples, the detection apparatus 708a is arranged to output data indicating the identity of the frame member from which the detection channel detects the environmental condition to the external controller, which then outputs the signal to a user of the automated storage and retrieval system. Again, the signal may be output by any suitable wired or wireless means.

In some examples, each detection channel of detection apparatus 708a maybe in communication with the aspirating frame members in a particular zone of the grid 100. The output identity of the frame member may additionally or alternatively identify the zone of the grid to which the frame member belongs.

For example, when the detection apparatus 708a comprises a smoke detector, the grid may include multiple zones. Each zone may store goods with varying degrees of flammability or may otherwise be provided as buffer zones. When the detection system detects smoke in one zone, fire suppressant may be released into that zone. Accordingly, the fire is localised and prevented from spreading into other zones, without flooding the entire grid with fire suppressant (and thereby potentially damaging a significant quantity of the stored goods). Similarly, when the detection apparatus 708a is arranged to detect air composition, a zone may comprise columns including parts of a vertical farm requiring a different environmental composition than at least one other zone. Similarly, when the detection apparatus 708a is arranged to detect the biproducts of spoiling, the zone may include bins 112 storing perishable goods.

Referring to Fig. 7B, the detection apparatus 708b may comprise a sensing module 710a and a receiving module 710b. The sensing module 710a is suitable for detecting the environmental condition. Accordingly, the sensing module 710a of the detection apparatus 708b may be suitable for detecting the presence of at least one particular component in a gas, as otherwise discussed herein. The sensing module also includes a transmitter, such as a radio transmitter or any other type of transmitter for wirelessly transmitting a signal to a remote location. The receiving module 710b comprises a cooperating receiver in communication with the transmitter. The receiver may be a radio receiver or any type of transmitter capable of receiving the signal from the sensing module 710a. Accordingly, when the sensing module detects an environmental condition, the sensing module 710a is arranged to communicate the detected environmental condition to the receiving module 710b (via the transmitter). For instance, the sensing module sends data indicating the detected environmental condition to the receiving module. On communication with the sensing module, the receiving module 710b may output the signal indicating the environmental condition to a user, sound an alarm, or activate a response system, such as a fire suppression system.

As shown in Fig. 7B, sensing module 710a may be positioned inside the grid 700. Accordingly, a plurality of sensing modules 710a may be provided, each of which is arranged to detect the environmental condition from independent aspirating frame members. In some examples, each sensing module may be arranged to detect the environment condition from multiple aspirating frame members. For instance, sensing module 710a shown in Fig. 7B is arranged to detect the environmental condition from aspirating frame members 704a and 704b. As shown, the sensing module 710a is in communication with aspirating frame members via transfer pipe 712b. The sensing module 710a is in communication with aspirating frame members 704a, 704b via the internal channels thereof. The sensing module may be arranged to detect the environment condition from every aspirating frame member within a zone of the grid, or a portion thereof.

The detection apparatus 708b shown in Fig. 7B may also include a plurality of detection channels as described with respect to Fig. 7A. Each sensing module 710a may comprise a detection channel. Here, each sensing module 710a is independently arranged to detect the environmental condition from the respective frame member(s) in communication therewith. In these examples, the receiving module 710b includes the controller which identifies the frame member(s) in communication with the sensing module detecting the environmental condition. Alternatively, multiple detection channels may be provided within the sensing modules, such that each sensing module can independently detect the environmental condition from each respective frame member (of a plurality of frame members) in communication therewith. Here, the controller may be provided in either the sensing module 710a or the receiving module 710b.

By comprising a detection apparatus 708b of a sensing module 710a and receiving unit 710b, the length of transfer pipes 712b required to install the environmental detection system in a grid 100 of an automated storage and retrieval system is reduced. This allows the environmental detection system to upscale to larger grids in which significant length of transfer pipe 712 might limit installation. Further, by reducing the length of transfer pipes, less power is required to draw air into the sensing module 710a and the environmental condition can be detected more efficiently. Further, by reducing the length of transfer pipes, the path between the columns of the storage system and the detection apparatus 708b is reduced, thereby increasing the environmental detection system response time. Further, associating a sensing module 710a with a specific aspirating frame members 704a, 704b or zones of aspirating frame members allows for easier identification of the frame member(s) associated with a detected environmental condition.

At least a module of the detection apparatus 708a, 708b may be located outside of the grid 700. As shown in Fig 7A, the whole detection apparatus 708a (or detection unit 708a) may be outside of the grid. As shown in Fig. 7B, the receiving module 710b of the detection apparatus may be outside the grid. Accordingly, the environmental detection system described herein is advantageous in its capability to both sample air from within the grid (via the vents in the aspirating frame members), and process detection outside of the grid, about a user-accessible workstation in the automated storage and retrieval system. For instance, if the environmental condition is the presence of smoke, the user-accessible workstation may include a display for identifying the location of smoke and/or fire in the grid.

In operation, and as discussed in more detail with reference to Fig. 8, the systems of Fig. 7A and 7B draw air (or a sample thereof) into the internal channels of aspirating frame members 704a, 704b via the vents and from their respective neighbouring columns. This air then passes through the channels, through the transfer pipes 712a, 712b, and into the detection apparatus 708a, 708b. In the example of Fig. 7B, the air passes into the sensing unit 710a of the detection apparatus 708b. The detection apparatus 708a, 708b then detects an environmental condition - such as one or more of: smoke; combustible, flammable or toxic gases, such as natural gas or propane; biproducts of spoiling; and/or air composition - in the air. In response to detecting the environmental condition, the detection apparatus then outputs a signal indicating the environmental condition to a user.

### Methods of detecting an environmental condition in an automated storage and retrieval system

Fig. 8 depicts a flowchart of an example method of detecting an environmental condition in an automated storage and retrieval system, such as the automated storage and retrieval system described with respect to Fig. 1. As described herein, the environmental condition may be the presence of one or more of: smoke; combustible, flammable or toxic gases, such as natural gas or propane; biproducts of spoiling; and/or air composition. The method is suitable for being carried out by an environmental detection system, such as the environmental detection system(s) described with respect to Figs. 5A-7B.

The method begins at step S100 by drawing air from the automated storage and retrieval system through at least one vent in a longitudinal surface of an elongate frame member in a frame of the automated storage and retrieval system. The elongate frame member comprises any of the aspirating frame members of the environmental detection system described herein. In this step, air is drawn through the at least one vent, via an internal channel of the elongate frame member, to a detection apparatus suitable for detecting the environmental condition. The detection apparatus comprises any of the detection apparatuses of the environmental detection system described herein with respect to Figs. 5A-7B.

In this step, the air may be drawn through the vent by a fan, or any other suitable means by generating a pressure gradient between the detection apparatus and the environment surrounding the frame member. Such a pressure gradient allows a greater volume of air to be sampled and analysed at the detection apparatus, thereby increasing the environmental detection accuracy and response time. As an alternative, fans may not be provided, in which case air may be drawn through the vent to the detection apparatus via diffusion.

Next, the method proceeds to step S105 in which the environmental condition is detected in the air drawn from the automated storage and retrieval system. This detection is carried out by the detection apparatus. For example, the detection apparatus may detect the presence of the environmental condition in the air drawn from the automated storage and retrieval system.

In response to detecting the environmental condition - that is detecting the presence of the environmental condition in the air drawn from the automated storage and retrieval system - the method continues at step S110. In step S110 a signal indicating the environmental condition in the automated storage and retrieval system is output from the detection apparatus. For instance, this signal may indicate, to a user of the automated storage and retrieval system, that the environmental condition has been detected. This signal may be output to, for instance, the display 410 of the processing system 400, or to any other suitable display around the automated storage and retrieval system. The signal may be output by any suitable wired or wireless means. Additionally or alternatively, the signal may include sounding an alarm, such as a fire alarm, and/or activating a response system. In response, the alarm may sound, and/or the response system may activate. The response system may be a response to the detected environmental condition to counteract the environmental condition.

For instance, if the environmental condition is the presence of smoke, the response system may be a fire suppression system. If the environmental condition is the presence of combustible, flammable or toxic gases, the response system may include shutting down the power to the storage system or evacuating the warehouse within which the storage system is located. If the environmental condition is the presence of spoiling biproducts, the response system may include bringing the bins to a port for inspection and/or disposal of their contents. If the environmental condition is air composition, the response system may include introducing or removing carbon dioxide and/or moisture from the environment.

In some examples, step S105 may comprise detecting the environmental condition from a particular frame member of the plurality of frame members. That is, step S105 may comprise detecting the environmental condition in the air (or sample thereof) drawn, or received, by a particular frame member of the plurality of frame members. Here, the environmental condition may be detected from a particular frame member by a detection channel of a plurality of detection channels of the detection apparatus, as described with respect to Figs. 7A and 7B. In particular, each detection channel is arranged to independently detect the environmental condition from a respective frame member. Accordingly, Step S105 may further comprise identifying, by a controller, the particular frame member. In examples, the environmental condition may be detected in a particular frame member when: the detection apparatus is configured to independently detect the environmental condition from each elongate frame member; and/or the detection apparatus comprises a plurality of detection channels.

The signal output in step S110 may additionally indicate the location of the particular frame member in the automated storage and retrieval system. Here, the particular frame member is the frame member from which the environmental condition is detected. The signal may indicate the location of the particular frame member to a user via display 410. The signal may indicate which alarm to sound (of, for instance, a plurality of alarms, each associated with a zone of the grid). The signal may indicate the location of the particular frame member to the response system, such as a fire suppression system. In response, the response system may be locally activated about the particular frame member. For instance, a fire suppression system may be activated in the zone of the grid containing the particular frame member.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An environmental detection system for use in an automated storage and retrieval system, the environmental detection system comprising:
at least one elongate frame member for use in a frame of the automated storage and retrieval system, the frame defining a plurality of storage columns for receiving stacks of storage containers; and
a detection apparatus for detecting an environmental condition,
wherein each elongate frame member comprises:
at least one vent in a longitudinal surface thereof; and
an internal channel disposed to provide fluid communication between the vent and the detection apparatus.

2. The environmental detection system of claim 1, wherein the environmental condition comprises the presence of smoke and the environmental detection system comprises a fire detection system.

3. The environmental detection system of claim 1 or claim 2, comprising a plurality of vents distributed along the respective elongate frame member.

4. The environmental detection system of any previous claim, wherein each vent comprises a plurality of vent orifices distributed around a transverse perimeter of the respective elongate frame member.

5. The environmental detection system of claim 4, wherein each vent orifice is positioned to face a respective segment around the transverse perimeter, wherein the respective segments combine to encompass the entire transverse perimeter.

6. The environmental detection system of any previous claim, comprising a plurality of elongate frame members, wherein the detection apparatus is configured to independently detect the environmental condition from each elongate frame member.

7. The environmental detection system of claim 6, wherein:
the detection apparatus comprises a plurality of detection channels, each detection channel arranged to independently detect the environmental condition from a respective frame member; and
the system further comprises a controller arranged, responsive to a detection channel detecting the environmental condition from a frame member, to identify the frame member.

8. The environmental detection system of any previous claim, wherein the detection apparatus comprises:
at least one sensing module for detecting the environmental condition, the sensing module comprising a transmitter; and
a receiving module comprising a receiver in communication with the transmitter,
wherein the sensing module is arranged to communicate via the transmitter with the receiving module in response to detecting the environmental condition.

9. The environmental detection system of claim 8, wherein the sensing module is disposed in fluid communication with respective internal channels of a plurality of elongate frame members.

10. An automated storage and retrieval system comprising:
a frame defining a plurality of storage columns for receiving stacks of storage containers; and
the environmental detection system according to any previous claim,
wherein the frame includes the at least one elongate frame member of the environmental detection system.

11. The automated storage and retrieval system of claim 10, wherein each storage column is defined by an elongate frame member of the environmental detection system.

12. The automated storage and retrieval system of claim 10 or claim 11, further comprising:
a stack of storage containers suitable for being received in a storage column of the frame,
wherein the environmental detection system comprises a plurality of vents distributed along the respective elongate frame member at an interval less than or equal to a stacking interval of the stack of storage containers.

13. A method of detecting an environmental condition in an automated storage and retrieval system, the method comprising:
drawing air from the automated storage and retrieval system through at least one vent in a longitudinal surface of an elongate frame member in a frame of the automated storage and retrieval system, via an internal channel of the elongate frame member, to a detection apparatus for detecting the environmental condition;
detecting, by the detection apparatus, the environmental condition in the air drawn from the automated storage and retrieval system; and
responsive to detecting the environmental condition, outputting, from the detection apparatus, a signal indicating the environmental condition in the automated storage and retrieval system.

14. The method of claim 13, wherein:
the frame comprises a plurality of frame members;
detecting the environmental condition comprises:
detecting, by a detection channel of a plurality of detection channels of the detection apparatus, the environmental condition from a particular frame member of the plurality of frame members, each detection channel being arranged to independently detect the environmental condition from a respective frame member, and
identifying, by a controller, the particular frame member; and
the signal output from the detection apparatus additionally indicates the location of the particular frame member in the automated storage and retrieval system.

15. The method of claim 13 or claim 14, wherein the environmental condition comprises the presence of smoke.
